# EUROPEAN PATENT APPLICATION

(11) **EP 2 410 220 A2**
(43) Date of publication of application: **25.01.2012**
(21) Application number: 11005895.5
(22) Date of filing: 19.07.2011
(51) Int. Cl.: F16K 31/06

(54) **Control valve for variable displacement compressor**

(30) Priority: 21.07.2010 JP 2010163642
(71) Applicant: Fujikoki Corporation, Tokyo 158-0082 (JP)
(72) Inventor: Tano, Shintaro, Tokyo 158-0082 (JP); Kume, Yoshiyuki, Tokyo 158-0082 (JP)
(74) Representative: Gleiss, Alf-Olav

(57) **Abstract**

There is provided a control valve (1) for a variable displacement compressor capable of directly connecting a plunger (37) to a valve rod in a relatively easy way, and realizing an improvement in assemblability, reduction in costs, and the like. A connecting cylinder (52) for directly connecting the plunger (37) to the valve rod (15) is provided. The valve rod (15) is provided with a mushroom-like or flange-like part. The connecting cylinder (52) is provided with an elastic locking piece which, by pushing the mushroom-like or flange-like part into the elastic locking piece (53), is pushed and opened outward in a radial direction so as for the mushroom-like or flange-like part to pass through the elastic locking piece, and which, after the passing of the mushroom-like or flange-like part, is restored to an original shape due to elasticity which the elastic locking piece has, and locks the mushroom-like or flange-like part.

## Description

### CROSS-REFERENCE TO RELATED APPLICATIONS

This application claims priority to Japanese Patent Application No. 2010-163642, filed July 21, 2010, all of which is herein incorporated by reference in its entirety.

### BACKGROUND

### Technical Field

The present disclosure relates to a control valve for a variable displacement compressor that is used in a car air-conditioner or the like, and in particular, relates to the control valve for a variable displacement compressor, in which it can be hard for a valve rod to cause defective operation, and which excels in assemblability and the like.

### Background Art

In order to adjust pressure Pc in a crank chamber of a compressor, a control valve for a variable displacement compressor used in a car air-conditioner and the like is generally configured to guide in refrigerants of discharge pressure Pd from (a discharge chamber of) the compressor and narrow down the refrigerants of the discharge pressure Pd to guide out such refrigerants into the crank chamber. In addition, the control valve for a variable displacement compressor is configured to control a guide-out amount (narrowing-down amount) into the crank chamber in response to intake pressure Ps of the compressor. As a basic configuration, as disclosed in Patent Document 1 (JP Patent Publication (Kokai) No. 2003-172256 A, the entire content of which is herein incorporated by reference in its entirety) etc, the aforesaid control valve includes:a valve rod having a valve body part,a valve body having a guide hole, in which the valve rod is slidably fitted, and having a valve chamber provided with a valve port, at which the valve body part contacts/leaves, wherein a discharge-pressure refrigerant inlet (Pd port) for guiding therein the refrigerants of the discharge pressure from the compressor is provided upstream of the valve port, and a refrigerant outlet (Pc port) communicated with the crank chamber of the compressor is provided downstream of the aforesaid valve port; a coil; a cylindrical stator arranged on the inner peripheral side of the coil; an attractor fixed to the stator; a plunger slidably arranged in an up-and-down direction below the attractor; a plunger spring arranged between the attractor and the plunger; an electromagnetic actuator having a guide pipe in which the plunger is slidably fitted; a pressure sensing chamber which is formed above the attractor and in which intake pressure is guided from the compressor via an intake pressure guiding-in port (Ps port); a pressure-sensitive responding member which biases the valve rod in a valve-opening direction in response to the pressure of the pressure sensing chamber; and a valve-closing spring which biases the valve rod in a valve-closing direction.

In the control valve configured as such, when the coil of the electromagnetic actuator is energized, the plunger is attracted to the attractor. With this, a biasing force of the valve-closing spring makes the valve rod move in the valve-closing direction so as to follow the plunger. Meanwhile, the refrigerants of the intake pressure Ps, which has been guided in from the compressor via the Ps port, are guided into the pressure sensing chamber from a guide-in chamber via a clearance etc. formed between the plunger and the guide pipe arranged on an outer periphery of the plunger. The pressure-sensitive responding member (e.g., a bellows device) is elastically displaced in response to the pressure of the pressure sensing chamber (intake pressure Ps) (when the intake pressure Ps is high, the pressure-sensitive responding member contracts; whereas when the intake pressure Ps is low, the pressure-sensitive responding member extends). Such displacement (biasing force) is transmitted to the valve rod, thereby adjusting the valve opening.

That is, the valve opening is determined based on an attractive force with which the attractor attracts the plunger, the biasing force of the pressure-sensitive responding member, and the biasing forces of the plunger spring (valve-opening spring) and of the valve-closing spring. In response to such valve opening, the guide-out amount (narrowing-down amount) toward the outlet side of the refrigerants of the discharge pressure Pd guided into the valve chamber from the Pd port, namely, into the crank chamber. This makes the pressure Pc in the crank chamber controlled.

However, in the control valve, the valve rod is configured to be moved in the valve-closing direction only by the biasing force of the valve-closing spring. If a foreign material becomes stuck between sliding contact surfaces of the valve rod and the guide hole, or the sliding resistance of the valve rod increases due to the seizure of oil or the like, there may occur malfunctioning such as the locking of the valve rod; for example, a problem that even if the plunger is attracted to the attractor, the valve rod is not moved in the valve-closing direction, and is left behind. In this case, the valve opening cannot be adequately adjusted. In order to solve such malfunctioning, it is only necessary to increase the biasing force of the valve-closing spring. However, this makes it necessary also to increase the biasing force of the plunger spring (valve-opening spring), resulting in the enlargement of the spring and a product, an increase in costs, and the like.

In order to solve the aforementioned problem, Patent Document 2 (JP Patent Publication (Kokai) No. 2004-100473 A, the entire content of which is herein incorporated by reference in its entirety) proposes a technique in which the plunger is directly connected to (integrated with) the valve rod, and when the plunger is attracted to the attractor, together with this, the valve rod is forcibly moved in the valve-closing direction.

However, also in the control valve in which the plunger is directly connected to the valve rod as proposed above, the following problems could occur.

That is, at the time of energization, the plunger may be deviated laterally (or may be drawn on one side) (in terms of the relationship of the coaxiality etc. of the attractor and the plunger) on a magnetic circuit, or may move in the up-and-down direction (in the valve-opening/closing direction) while being inclined. Thus, if the plunger is directly connected to the valve rod without any looseness, the valve rod is pressed against the guide hole with the rise of the lateral deviation or the inclination of the plunger, and the sliding resistance increases, resulting in being incapable of smoothly moving. This may cause the malfunctioning, such as the locking, in the same manner as mentioned above, in extreme cases.

In addition, when the plunger is directly connected to the valve rod, due to the above-mentioned problem, there is a tendency that the dimensional control or the assembling accuracy of parts, etc. is strictly required, resulting in an increase in costs.

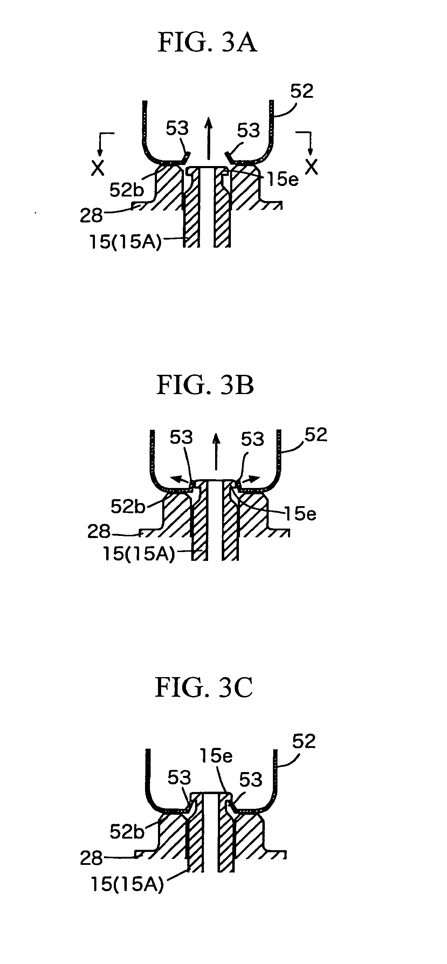

In order to solve the above-mentioned problems, as described in Patent Document 3 (JP Patent Publication (Kokai) No. 2007-285159 A, the entire content of which is herein incorporated by reference in its entirety) (in FIGS. 3 to 5 thereof), the assignee of the present application has proposed the control valve for a variable displacement compressor in which, when the plunger is attracted to the attractor, the valve rod is forcibly pulled in the valve-closing direction by the plunger; however, the valve rod is fitted with a predetermined clearance in a radial direction with respect to the plunger so as not to be affected by the lateral deviation and the inclination of the plunger. More specifically, as shown in FIGS. 3 to 5 of the aforesaid Patent Document 3, this control valve is configured such that, for example, the valve rod is provided with a small diameter part; above the small diameter part, a large diameter part, which will be a locking part for forcible movement, is provided; at the center of the plunger, a central hole, in which the aforesaid small diameter part is fitted; in order to improve the convenience at the time of assembly, an eccentric hole, into which the aforesaid large diameter part is insertable while the eccentric hole is made eccentric by a predetermined distance in the radial direction so as to be partially overlapped with the aforesaid central hole; and the clearance, which is formed between the aforesaid small diameter part and the aforesaid central hole, is larger than the clearance, which is formed between the plunger and the guide pipe arranged on the outer periphery of the plunger.

### SUMMARY

However, the control valve for a variable displacement compressor described in Patent Document 3 is configured such that, when assembling the valve, the valve rod is inserted into the valve body from underneath, and the plunger is passed through the valve rod; and thereafter, the plunger is laterally deviated to be fitted to the valve rod or caulked thereto, thereby directly connecting the plunger to the valve rod; and thus, there is a tendency that the assembling of the valve may require great care, resulting in high manufacturing costs.

The present disclosure has been made in view of the above-mentioned circumstances. It is an object of the present disclosure to provide a control valve for a variable displacement compressor capable of directly connecting a plunger to a valve rod in a relatively easy way, and realizing an improvement in assemblability, reduction in costs, and the like.

In order to achieve the above-mentioned object, a control valve for a variable displacement compressor according to the present disclosure basically includes:a valve rod having a valve body part a valve body having a guide hole, in which the valve rod is slidably fitted, and having a valve chamber provided with a valve port, at which the valve body part contacts/leaves, wherein a discharge-pressure refrigerant inlet for guiding therein refrigerants of discharge pressure from a compressor is provided upstream of the valve port, and a refrigerant outlet communicated with a crank chamber of the compressor is provided downstream of the aforesaid valve port; an electromagnetic actuator having a plunger for moving the valve rod in a valve-closing direction; a pressure sensing chamber into which intake pressure is guided from the compressor; and a pressure-sensitive responding member which presses the valve rod in a valve-opening direction in response to the pressure of the pressure sensing chamber, wherein a connecting member for connecting the plunger to the valve rod is provided, the connecting member being configured such that the valve rod is inserted into the guide hole of the valve body, thereby engaging with one end of the valve rod to lock the one end.

In a more specific and preferred aspect, the valve rod is provided with a mushroom-like or flange-like part, and the connecting member has a cylindrical shape, and is made of an elastic plate material. In addition, the connecting member is provided with an elastic locking piece which, by pushing the mushroom-like or flange-like part into the elastic locking piece, is pushed and opened outward in a radial direction so as for the mushroom-like or flange-like part to pass through the elastic locking piece, and which, after the passing of the mushroom-like or flange-like part, is restored to an original shape due to elasticity which the elastic locking piece has, and locks the mushroom-like or flange-like part.

In this case, in a more specific and preferred aspect, a bottom part of the cylindrical connecting member is provided with the elastic locking piece having a truncated cone shape split into a plurality of parts, and the elastic locking piece bends inward from the bottom part.

In another preferred aspect, in the connecting member, there is provided a bellows device and the pressure sensing chamber both serving as the pressure-sensitive responding member.

In a control valve for a variable displacement compressor according to the present disclosure, it is possible to extremely easily connect a plunger to a valve rod only by inserting a valve rod into a guide hole of the valve body, and is possible to realize an improvement in assemblability, reduction in costs, and the like.

In addition, a connecting member is configured to have a cylindrical shape and be made of an elastic plate material, whereby it is possible to keep manufacturing costs down, and realize weight saving and the like.

Moreover, since a bellows device can be arranged in the connecting member that is located underneath a coil, a coil diameter can be made small, compared with a case where the bellows device is arranged at the inner peripheral part of the coil. This also makes it possible to realize downsizing, reduction in costs, and the like.

### BRIEF DESCRIPTION OF THE DRAWINGS

FIG. 1 is a longitudinal sectional view showing one embodiment of a control valve for a variable displacement compressor according to the present disclosure.
FIG. 2 is a sectional view taken along and as viewed in a direction of arrows X-X of FIG. 3A.
FIGS. 3A to 3C are views provided for the explanation of valve assembling of the embodiment shown in FIG. 1.

### DETAILED DESCRIPTION OF THE PREFERRED EMBODIMENT

Hereinafter, an explanation will be made as to an embodiment of a control valve for a variable displacement compressor of the present disclosure with reference to the drawings.

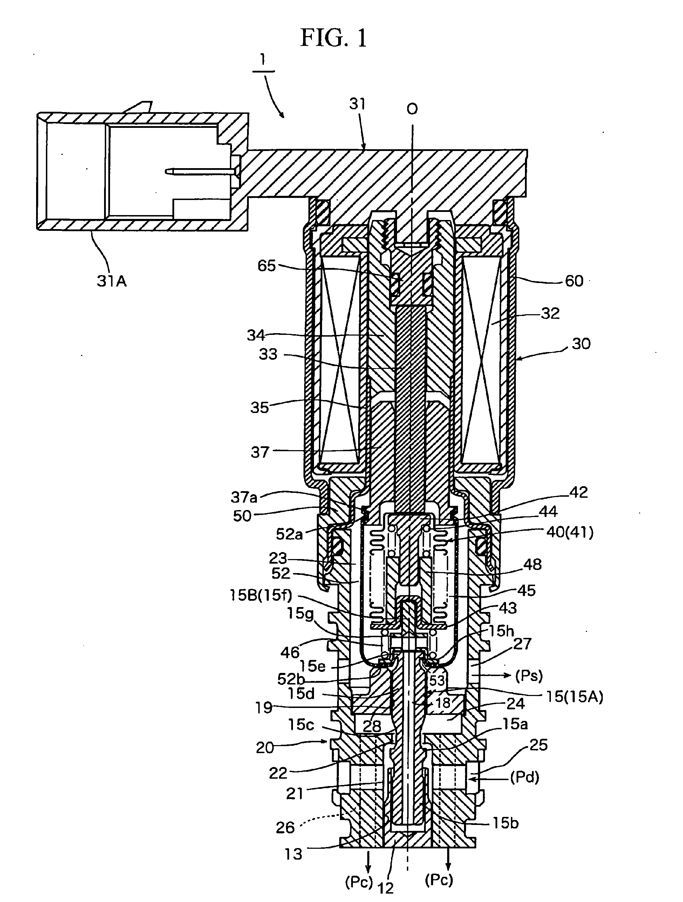

FIG. 1 is a longitudinal sectional view showing one embodiment of the control valve for a variable displacement compressor according to the present disclosure.

An illustrated control valve 1 includes an electromagnetic actuator 30, a valve body 20, a valve rod 15 that is slidably fitted in the valve body 20, and a bellows device 40 serving as a pressure-sensitive responding member.

The electromagnetic actuator 30 includes a coil 32 for energized excitation, a connector head 31 having a power-supply connector part 31A attached on the upper side of the coil 32, a cylindrical attractor 34 (stator) arranged on the inner peripheral side of the coil 32, a stair-like stepped guide pipe 35 whose upper end is joined to an outer periphery of a lower end (stepped part) of the attractor 34 using TIG welding, a plunger 37 slidably arranged in an up-and-down direction on the inner peripheral side of the guide pipe 35 under the attractor 34, a stepped cylindrical housing 60 externally inserted around the coil 32 and the connector head 31, and a holder 50 that is arranged between a lower end of the housing 60 and the stepped guide pipe 35 and fixes such lower end and such guide pipe to the upper part of the valve body 20.

A hexagon socket head adjusting screw 65 is screwed into the upper part of the attractor 34. With a lower end surface of this adjusting screw 65, an upper end surface of a tension rod 33, which is slidably fitted in the attractor 34 and the plunger 37, is brought into contact.

The valve body 20 includes a valve chamber 21 provided with a valve seat (valve port) 22 at which a valve body part 15a of the valve rod 15 contacts/leaves. At the outer peripheral part of this valve chamber 21 (on the lower side of the valve seat 22) , there are provided a plurality of discharge pressure refrigerant guiding-in ports 25 for guiding therein refrigerants of discharge pressure Pd from a compressor. On the upper side of the valve seat 22, a convex stopper part 28 for restricting the most lowered position of the plunger 37 is fixed by means of press-fitting or the like. Between this convex stopper part 28 and the valve seat 22, there is provided a guide-out chamber 24 for guiding the refrigerant (pressure Pc of the refrigerant), which flows via the valve seat (valve port) 22 from the valve chamber 21 while being narrowed down, into a crank chamber. At the lower part of the valve body 20, there are provided a plurality of (e.g., four) guide-out holes 26 that are opened to the guide-out chamber 24 and a lower end surface of the valve body 20. In addition, at the center of a lower end of the valve body 20, an insertion hole 13, into which the valve rod 15 is inserted at the time of assembly, is provided. In the insertion hole 13, by means of press-fitting or the like, there is fixed a cylindrical plug-like guide member 12 having a bottom and a step in which a lower end 15b (lower fitting-in part) of the valve rod 15, which will be described later, is slidably fitted. Moreover, on the upper side of the convex stopper part 28 in the valve body 20, an intake pressure guiding-in port (Ps port) 27 and an intake pressure guiding-in chamber 23 are provided.

The valve rod 15 includes a lower rod-like member15A which is slidably fitted in a guide hole 19 formed in the convex stopper part 28 and an upper convex member 15B arranged on the upper side of the lower rod-like member 15A. The lower rod-like member 15A includes the lower fitting-in part 15b, the valve body part 15a having a diameter larger than a diameter of the lower fitting-in part 15b, a small diameter part 15c, an upper fitting-in part 15d, and a mushroom-like head part 15e in sequence from the bottom. In addition, the upper convex member 15B includes a small diameter rod-like part 15f, a large diameter part 15g, and a flange-like spring receiving part 15h in sequence from the top. Moreover, inside of the valve rod 15 including the lower rod-like member 15A and the upper convex member 15B, a pressure equalizing hole 18 having a T-shaped cross section is formed.

Meanwhile, in the present embodiment, in order to directly connect the plunger 37 to the valve rod 15 (the lower rod-like member 15A of the valve rod 15), there is provided a bottomed cylindrical connecting cylinder (connecting member) 52 made of a thin plate material having elasticity, and in this connecting cylinder 52, the bellows device 40 and the upper convex member 15B of the valve rod 15 are accommodated.

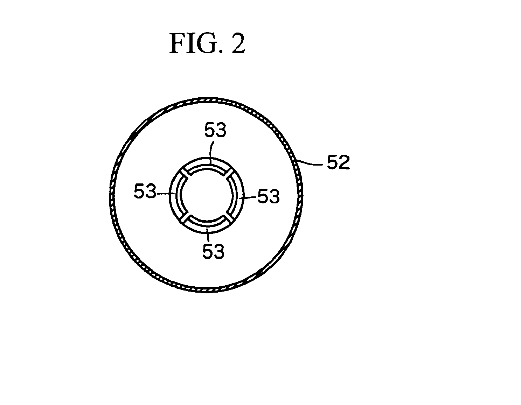

In detail, the upper part of the connecting cylinder 52 is caulked and fixed (a caulked part 52a) to a circular groove 37a formed around the outer periphery at the lower part of the plunger 37. In addition, as is clearly understood with reference to FIGS. 2 and 3, at the center of a bottom part 52b of the connecting cylinder 52, there is provided an elastic locking piece 53 having a truncated cone shape split into four parts, which bends inward (toward the upper side) from the bottom part 52b. As shown in the order from FIGS. 3A through 3C, this elastic locking piece 53 is configured such that, by pushing up the elastic locking piece 53 from underneath by means of the mushroom-like head part 15e of the lower rod-like member 15A in the valve rod 15, the elastic locking piece 53 is pushed and opened outward in a radial direction so as for the mushroom-like head part 15e to pass through the elastic locking piece 53, and after the passing of the mushroom-like head part 15e, the elastic locking piece 53 is restored to the original truncated cone shape split into four parts due to the elasticity which the elastic locking piece 53 has, and locks the mushroom-like head part 15e. The elastic locking piece 53 locks the mushroom-like head part 15e, whereby the plunger 37 is directly connected to the valve rod 15 via the connecting cylinder 52, and the plunger 37 and the valve rod 15 are integrally moved up and down.

In addition, with an upper surface of the bottom part 52b of the connecting cylinder 52 and that of the mushroom-like head part 15e, the flange-like spring receiving part 15h and the large diameter part 15g of the upper convex member 15B are brought into contact.

The bellows device 40 arranged in the connecting cylinder 52 includes a bellows 41 serving as the pressure-sensitive responding member, an upper stopper 42 having a reverse convex shape, a lower stopper 43 having a reverse concave shape, compression coil springs 44, a cylindrical spring receiver 48, and the like. The space formed between the connecting cylinder 52 and the bellows 41 is a pressure sensing chamber 45. An upper end surface (the upper stopper 42) of the bellows device 40 is brought into contact with the tension rod 33. The small diameter rod-like part 15f of the upper convex member 15B is inserted into and brought into contact with the lower stopper 43.

In addition, between the lower stopper 43 and the flange-like spring receiving part 15h of the upper convex member 15B, compression coil springs 46, which support the bellows 41 and bias the valve rod 15 in a valve-opening direction (downward), are mounted in a compressed manner.

In the control valve 1 configured as such, when the plunger 37 is attracted to the attractor 34 (at the time of energization), the valve rod 15 is forcibly pulled in a valve-closing direction via the connecting cylinder 52 by means of the plunger 37. Meanwhile, intake pressure Ps guided from the compressor into the intake pressure guiding-in port 27 is guided into the pressure sensing chamber 45 via a clearance of the respective members. The bellows device 40 (the inside thereof is in a vacuum state) is elastically displaced in response to the pressure (the intake pressure Ps) of the pressure sensing chamber 45 (when the intake pressure Ps is high, the bellows device 40 contracts, whereas when the intake pressure Ps is low, the bellows device 40 extends). Such displacement is transmitted to the valve rod 15, thereby adjusting the valve opening.

That is, the valve opening is determined based on an attractive force with which the attractor 34 attracts the plunger 37, a biasing force of the bellows device 40, and the biasing forces of the compression coil springs 46. In response to the aforementioned valve opening, a guide-out amount (narrowing-down amount) toward an outlet 26 side of the refrigerants of the discharge pressure Pd guided from the discharge pressure refrigerant guiding-in port 25 into the valve chamber 21, namely, into the crank chamber. This makes the pressure Pc in the crank chamber controlled.

When assembling the control valve 1 of the present embodiment, the parts configured of the plunger 37, the connecting cylinder 52, the bellows device 40, and the upper convex member 15B are first assembled, and this assembly is assembled to the electromagnetic actuator 30 and the valve body 20 as shown in FIG. 1. Thereafter, the lower rod-like member 15A of the valve rod 15 is inserted from the underside of the valve body 20 into the insertion hole 13. As shown in the order from FIGS. 3A through 3C, the elastic locking piece 53 having the truncated cone shape split into four parts is pushed up from underneath by the mushroom-like head part 15e of the lower rod-like member 15A in the valve rod 15. This makes the elastic locking piece 53 pushed and opened outward in a radial direction, and makes the mushroom-like head part 15e penetrate above the elastic locking piece 53. At the same time, the elastic locking piece 53 is restored to the original truncated cone shape split into four parts due to the elasticity which the elastic locking piece 53 has, and locks the mushroom-like head part 15e. The elastic locking piece 53 locks the mushroom-like head part 15e, whereby the plunger 37 is directly connected to the valve rod 15 via the connecting cylinder 52, and the plunger 37 and the valve rod 15 are integrally moved up and down. Subsequently, the plug-like guide member 12 is fixed to the insertion hole 13 by means of press-fitting or the like, thereby assembling the control valve 1.

As described above, in the control valve 1 of the present embodiment, it is possible to directly connect the plunger 37 to the valve rod 15 extremely easily only by pushing the mushroom-like head part 15e of the valve rod 15 into the elastic locking piece 53 provided at the connecting cylinder 52, and is possible to realize an improvement in assemblability, reduction in costs, and the like.

In addition, since the connecting cylinder 52 can be manufactured by, for example, performing a drawing press to a thin metal plate, it is possible to keep manufacturing costs down, and realize weight saving and the like.

Moreover, the bellows device 40 can be arranged in the connecting cylinder 52 that is located underneath the coil 32, in other words, the connecting cylinder 52 doubles as a bellows accommodating chamber. Thus, a coil diameter can be reduced, compared with a case where the bellows device is conventionally arranged at the inner peripheral part of the coil 32. The reduction in the diameter of the coil 32 also makes it possible to realize downsizing, reduction in costs, and the like.

Although the systems and methods of the present disclosure have been described with reference to an exemplary embodiment thereof, the present disclosure is not limited to such exemplary embodiment and/or implementations. Rather, the systems and methods of the present disclosure are susceptible to many implementations and applications, as will be readily apparent to persons skilled in the art from the disclosure hereof. The present disclosure expressly encompasses such modifications, enhancements and/or variations of the disclosed embodiment. Since many changes could be made in the above construction and many widely different embodiments of this disclosure could be made without departing from the scope thereof, it is intended that all matters contained in the drawings and specification shall be interpreted as illustrative and not in a limiting sense. Additional modifications, changes, and substitutions are intended in the foregoing disclosure. Accordingly, it is appropriate that the appended claims be construed broadly and in a manner consistent with the scope of the disclosure.

### DESCRIPTION OF SYMBOLS

- 1: Control valve for a variable displacement compressor
- 15: Valve rod
- 15A: Lower rod-like member
- 15B: Upper convex member
- 15e: Mushroom-like head part
- 19: Guide hole
- 20: Valve body
- 21: Valve chamber
- 22: Valve seat (valve port)
- 30: Electromagnetic actuator
- 40: Bellows device
- 52: Connecting cylinder (connecting member)
- 53: Elastic locking piece

## Claims

1. A control valve for a variable displacement compressor comprising: a valve rod having a valve body part :a valve body having a guide hole, in which the valve rod is slidably fitted, and having a valve chamber provided with a valve port, at which the valve body part contacts/leaves, wherein a discharge-pressure refrigerant inlet for guiding therein refrigerants of discharge pressure from a compressor is provided upstream of the valve port, and a refrigerant outlet communicated with a crank chamber of the compressor is provided downstream of the valve port; an electromagnetic actuator including a plunger for moving the valve rod in a valve-closing direction; a pressure sensing chamber into which intake pressure is guided from the compressor; and a pressure-sensitive responding member which presses the valve rod in a valve-opening direction in response to the pressure of the pressure sensing chamber,
wherein a connecting member for connecting the plunger to the valve rod is provided, the connecting member being configured such that the valve rod is inserted into the guide hole of the valve body, thereby engaging with one end of the valve rod to lock the one end.

2. The control valve for a variable displacement compressor according to claim 1, wherein the valve rod is provided with a mushroom-like or flange-like part; the connecting member has a cylindrical shape, and is made of an elastic plate material; and the connecting member is provided with an elastic locking piece which, by pushing the mushroom-like or flange-like part into the elastic locking piece, is pushed and opened outward in a radial direction so as for the mushroom-like or flange-like part to pass through the elastic locking piece, and which, after the passing of the mushroom-like or flange-like part, is restored to an original shape due to elasticity which the elastic locking piece has, and locks the mushroom-like or flange-like part.

3. The control valve for a variable displacement compressor according to claim 2, wherein a bottom part of the cylindrical connecting member is provided with the elastic locking piece having a truncated cone shape split into a plurality of parts, and the elastic locking piece bends inward from the bottom part.

4. The control valve for a variable displacement compressor according to any of claims 1 to 3, wherein there is provided, in the connecting member, a bellows device and the pressure sensing chamber both serving as the pressure-sensitive responding member.
